# EUROPEAN PATENT APPLICATION

(11) **EP 3 101 314 A1**
(43) Date of publication of application: **07.12.2016**
(21) Application number: 15743664.3
(22) Date of filing: 23.01.2015
(51) Int. Cl.: F16H 35/00, F16D 41/06, F16D 41/08, F16D 59/02, F16D 65/16, F16H 1/32, F16H 1/46, F16D 127/10, F16D 129/04

(54) **REDUCTION GEAR WITH BRAKE**

(30) Priority: 28.01.2014 JP 2014013311; 07.04.2014 JP 2014078373; 14.10.2014 JP 2014209700
(71) Applicant: NTN Corporation, Osaka-shi, Osaka 550-0003 (JP)
(72) Inventor: TAKADA Seiichi, Kuwana-shi Mie 511-0811 (JP)
(74) Representative: Grünecker Patent- und Rechtsanwälte PartG mbB
(86) International application number: PCT/JP2015/051823
(87) International publication number: WO 2015/115324

(57) **Abstract**

A device configured to actuate a driven member by driving a driving motor (11) includes a brake which does not consume electric power and which can be easily mounted in the device. A speed reducer is mounted in the device, and includes a reduction mechanism (2) for transmitting the rotation of the driving motor (11) toward the driven member after reducing its speed, and a locking type reverse input shutoff mechanism (3), as the brake, which is configured to mechanically lock up when reverse input torque is applied from the driven member while the driving motor (11) is not being driven, thereby retaining the position of the driven member. The reduction mechanism (2) and the reverse input shutoff mechanism (3) are combined to constitute a single unit.

## Description

### TECHNICAL FIELD

The present invention relates to a speed reducer including a brake for retaining the position of a driven member while a driving motor is not running.

### BACKGROUND ART

In a device for actuating a driven member by driving a motor, when the driving motor is intentionally stopped in order to stop the driven member, or if, while the driven member is being actuated, the driving motor is brought to an unintended stop due e.g., to power outage, the driven member may change its position (attitude), which could cause various kinds of trouble. One way to prevent this is to mount a brake capable of retaining the position of the driven member while the driving motor is not being driven, in the driving portion (including a driving motor and a speed reducer) of the device. For example, such brakes are typically mounted in driving portions of many industrial robots.

Many of such brakes, which are mounted in driving portions of various devices, are electromagnetic brakes configured to be actuated while not energized (see, for example, the below-identified Patent documents 1 and 2). An electromagnetic brake of this type includes a brake plate provided in the drive path extending from the driving motor to the driven member, a friction plate pressed against the brake plate by a spring, and an electromagnet configured, when energized, to move the friction plate away from the brake plate against the biasing force of the spring, and configured such that while the motor is running (while energized), the electromagnet compresses the spring, thereby separating the friction plate from the brake plate, and while the motor is not running (while not energized), the rotation of the brake plate is restricted by pressing the friction plate against the brake plate under the biasing force of the spring, thereby retaining the position of the driven member.

### PRIOR ART DOCUMENTS

### PATENT DOCUMENTS

Patent document 1: JP Patent Publication 60-23654A
Patent document 2: JP Patent Publication 6-285785A

### OBJECT OF THE INVENTION

In a device using an electromagnetic brake of this type, i.e., a brake configured to be actuated while not energize, it is necessary to continuously supply electric power to the electromagnet of the brake while the motor is running in order to prevent the brake from being applied while the motor is running, so that this device consumes a large amount of electric power compared to devices not including this type of brakes. Further, since this type of brake has to be mounted in the device separately from the driving motor and the speed reducer, it is troublesome to assemble the device.

An object of the present invention is to provide a device configured to actuate a driven member by driving a motor, and including a brake which does not consume electric power and which can be easily mounted in the device.

### MEANS FOR ACHIEVING THE OBJECT

In order to achieve this object, the present invention provides a speed reducer comprising a reduction mechanism configured to transmit a rotation of a driving motor toward a driven member after reducing the rotation, and a brake configured to retain a position of the driven member while the driving motor is not running, wherein the brake comprises a reverse input shutoff mechanism including an input portion coupled to an output member of the reduction mechanism such that rotation can be transmitted therebetween, and an output portion coupled to the driven member such that rotation can be transmitted therebetween, the reverse input shutoff mechanism being configured such that when input torque is applied to the input portion, the rotation of the input portion is transmitted to the output portion, and when reverse input torque is applied to the output portion, the output portion is locked and stopped (this type of brake is hereinafter sometimes referred to as "locking type").

That is, the speed reducer according to the present invention includes a brake comprising the locking type reverse input shutoff mechanism which is configured, when reverse input torque is applied to the output portion, to mechanically lock up, thereby preventing rotation of the output portion, and this brake and the reduction mechanism are combined to constitute a single unit. Thus, this speed reducer consumes no electric power, and can be easily mounted in a device. The device in which is mounted this speed reducer therefore consumes less electric energy, and can be efficiently assembled, compared to a device in which a speed reducer and an electromagnetic brake configured to be actuated while not energized are mounted separately from each other.

The reverse input shutoff mechanism may comprise a reverse input shutoff clutch including a locking means configured to lock the output portion to a fixed member, an unlocking means configured to unlock the output portion from the fixed member when the input portion is rotated under the input torque, and a torque transmission means configured to transmit the rotation of the input portion to the output portion with a slight angular delay when the output portion is unlocked from the fixed member.

In a specific arrangement of the reverse input shutoff clutch, the fixed member is a fixed outer ring disposed radially outwardly of the output portion, and having a cylindrical surface on the inner periphery of the fixed outer ring, the locking means including the cylindrical surface, cam surfaces formed on an outer periphery of the output portion such that a plurality of wedge-shaped spaces each gradually narrowing toward two circumferential ends thereof are defined between the output portion and the fixed outer ring, pairs of rollers, each pair being mounted in each of the wedge-shaped spaces, and springs each mounted in each of the wedge-shaped spaces and biasing the pair of rollers into the respective circumferential ends of the wedge-shaped space, the unlocking means including an annular unlocking piece disposed radially outwardly of the output portion, the unlocking piece having pillars inserted on both circumferential sides of the wedge-shaped spaces, and being formed with a first engaging hole, and a protrusion formed on the input portion, and inserted in the first engaging hole of the unlocking piece with a circumferential gap left between the first engaging hole and the protrusion, the unlocking means being configured such that when the input portion rotates, the protrusion engages the first engaging hole, and circumferentially pushes the unlocking piece such that the pillars of the unlocking piece push rotationally rearward ones of the rollers to wider portions of the respective wedge-shaped spaces, against the biasing forces of the respective springs, the torque transmission means including a second engaging hole formed in the output portion and arranged and shaped such that the protrusion of the input portion is inserted in the second engaging hole with a circumferential gap left between the second engaging hole and the protrusion, the circumferential gap between the second engaging hole and the protrusion being larger than the circumferential gap between the first engaging hole and the protrusion, whereby after the output portion is unlocked from the fixed member, the protrusion of the input portion engages the second engaging hole, and circumferentially pushes the output portion.

By coupling a manual operating member to an input member of the reduction mechanism, it is possible, if necessary, to manually operate the driven member when performing maintenance after stopping the driving motor. In this arrangement, if the brake is a conventional electromagnetic brake which is actuated while not energized, it is necessary to turn the manual operating member after releasing the brake by energizing the brake, or to turn the manual operating member without releasing the brake by applying torque larger than the braking force. However, according to the present invention, since the reverse input shutoff mechanism is used, it is possible to change the position (attitude) of the driven member by turning the manual operating member without applying large torque and without the need to release the brake and thus safely.

By detachably mounting the manual operating member to the input member of the reduction mechanism, the manual operating member can be dismounted from the speed reducer while the speed reducer is being normally driven by the motor, thereby minimizing the space necessary during operation.

If the reduction mechanism includes two planetary gear mechanisms arranged in juxtaposition with each other in the axial direction of the speed reducer, and configured to perform differential motions, by fixedly fitting an input gear on the outer periphery of the input shaft of the reduction mechanism, and by fixedly fitting a transmission gear having a fewer number of teeth than the input gear on the outer periphery of the shaft of the driving motor so as to mesh with the input gear, the rotation of the motor can be transmitted to the input shaft of the reduction mechanism after reducing its speed. As a result, the planetary gears of the respective planetary gear mechanisms rotate about their own axes at lower speeds. This prolongs the life of the bearings supporting the planetary gears so as to be rotatable about their own axes. A plurality of driving motors may be provided around the axis of the input shaft, and a plurality of transmission gears may be fixedly fitted on the outer peripheries of the shafts of the respective driving motors such that the transmission gears mesh with the input shaft. With this arrangement, by changing the number of driving motors used, it is possible to easily adjust the output.

Alternatively, the reduction mechanism may be a wave generating gear device comprising a wave generator coupled to the driving motor such that rotation can be transmitted therebetween, and serving as the input member of the reduction mechanism, a circular spline fixed at a position radially outwardly of the wave generator, and the above-described output member, the output member comprising a flex spline disposed between the wave generator and the circular spline, and coupled, at one end portion of the flex spline, to the input portion of the reverse input shutoff mechanism such that rotation can be transmitted therebetween. Compared to the speed reducer in which is used a reduction mechanism comprising two planetary gear mechanisms that are arranged in juxtaposition with each other in the axial direction, the speed reducer in which is used the above-described wave generating gear device is simple in structure and small in axial dimension.

The speed reducer using this wave generating gear device is preferably further comprise a guide member fixed at a position where the guide member is in sliding contact with the end surface of the flex spline at the other end of the flex spline, and configured to restrict the axial movement of the flex spline toward the other end of the speed reducer. Otherwise, in such a speed reducer, the flex spline is preferably axially joined to the input portion of the reverse input shutoff mechanism, and the output portion of the reverse input shutoff mechanism preferably includes a guide portion in engagement with the input portion of the reverse input shutoff mechanism, and configured to restrict the axial movement of the flex spline toward the other end of the speed reducer.

The speed reducer may further comprise a cross roller bearing disposed between the output portion of the reverse input shutoff mechanism and the driven member, and including an inner race coupled to the output portion of the reverse input shutoff mechanism and the driven member such that rotation can be transmitted therebetween, and an outer race which is fixed in position. Such a cross roller bearing improves stability in transmission of rotation.

The speed reducer may be configured to be capable of detecting the rotational speed of the output portion of the reverse input shutoff mechanism, and correcting the driving rotational speed of the driving motor according to the difference between the rotational speed detected and a predetermined target rotational speed. With this arrangement, it is possible to rotate the output portion at substantially the target rotational speed, even if there is a loss in transmission of rotation between the driving motor and the output portion.

In a further preferred arrangement, the driving motor, the reduction mechanism, and the reverse input shutoff mechanism are mounted in a single housing so that the driving motor, the reduction mechanism, and the reverse input shutoff mechanism constitute a single unit, the housing is divided axially into a plurality of separate portions, the separate portions are formed with positioning steps on surfaces along which the housing is divided into the separate portions, the positioning steps being coaxial with each other and fitted together, and with the positioning steps fitted together, bolt holes extending through the entire housing are aligned with each other, and the separate portions are fixedly coupled together by a bolt inserted through the bolt holes and a nut. With this arrangement, the parts of the speed reducer can be smoothly rotated while maintaining their coaxiality.

The present invention is especially effectively applicable to a speed reducer with a brake mounted in a joint driving portion of a robot.

### ADVANTAGES OF THE INVENTION

Since, as described above, the locking type reverse input shutoff mechanism as a brake, and the reduction mechanism constitutes a single unit, compared to a speed reducer in which are separately mounted a conventional electromagnetic brake to be actuated while not energized, and a reduction mechanism, the speed reducer with a brake according to the present invention consumes less electric power, and can be easily assembled.

### BRIEF DESCRIPTION OF THE DRAWINGS

Fig. 1 is a vertical sectional front view of a speed reducer with a brake of a first embodiment.
Fig. 2 is an exploded perspective of a portion of Fig. 1.
Fig. 3 is a sectional view taken along line III-III of Fig. 1.
Fig. 4 is a sectional view taken along line IV-IV of Fig. 1.
Figs. 5(a) and 5(b) show how rotation is transmitted in a reverse input shutoff mechanism of Fig. 1.
Fig. 6 is a vertical sectional front view of a modified torque transmission means of the reverse input shutoff mechanism.
Figs. 7(a) and 7(b) are sectional views taken along line VII-VII of Fig. 6, showing how rotation is transmitted.
Fig. 8 is a vertical sectional front view showing a modified torque transmission means and a modified unlocking means of the reverse input shutoff mechanism.
Figs. 9(a) and 9(b) are sectional views taken, respectively, along line IXa-IXa and line IXb-IXb of Fig. 8.
Figs. 10(a) and 10(b) are partial exploded perspective views showing a modified housing assembling means.
Figs 11(a) and 11(b) show how the housing is assembled by the housing assembling means of Figs. 10(a) and 10(b).
Fig. 12 is a vertical sectional front view of a speed reducer with a brake of a second embodiment.
Fig. 13 is a vertical sectional front view of a speed reducer with a brake of a third embodiment.
Fig. 14 is a vertical sectional front view of a speed reducer with a brake of a fourth embodiment.
Fig. 15 is a sectional view taken along line XV-XV of Fig. 14.
Fig. 16 is an exploded perspective view of a portion of a reverse input shutoff mechanism of Fig. 14.
Figs. 17(a) and 17(b) show how rotation is transmitted in the reverse input shutoff mechanism of Fig. 14.
Fig. 18 is a vertical sectional front of a speed reducer with a brake of a fifth embodiment.
Fig. 19 is a sectional view taken along line XIX-XIX of Fig. 18.
Fig. 20 is a vertical sectional front view of a modified example of the speed reducer of Fig. 18.
Fig. 21 is a sectional view taken along line XXI-XXI of Fig. 20.

### BEST MODE FOR EMBODYING THE INVENTION

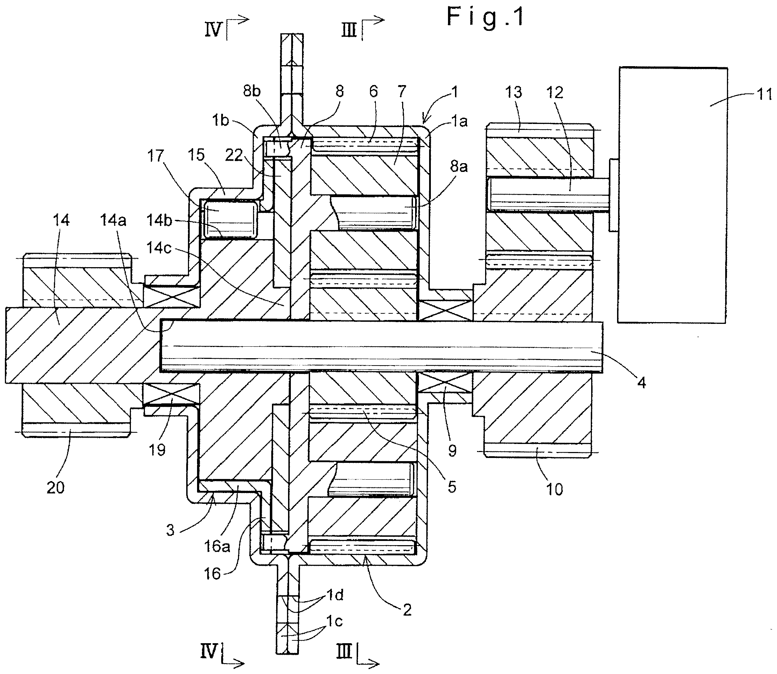

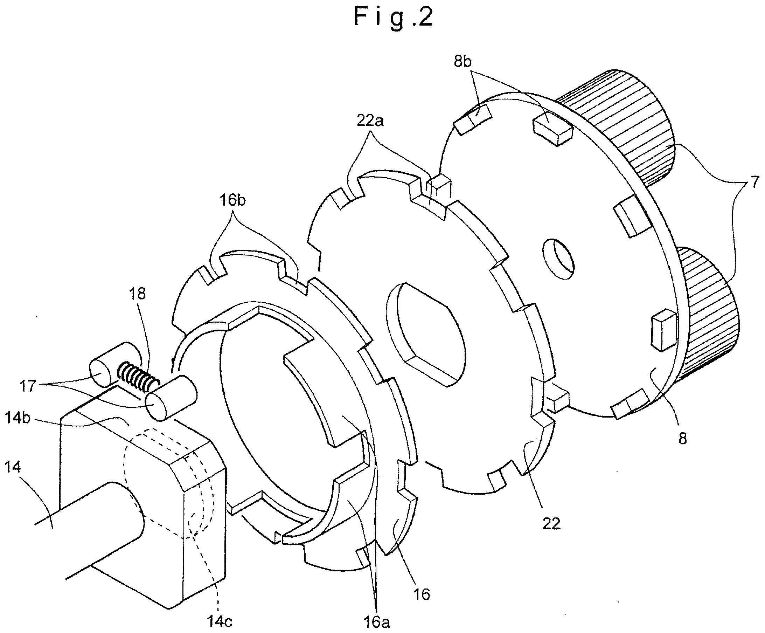

The embodiments are now described with reference to the drawings. Figs. 1 - 5(b) show the first embodiment. As shown in Fig. 1, the speed reducer of the first embodiment includes a reduction mechanism 2 and a reverse input shutoff mechanism 2 as a brake are arranged, in a housing (fixed member) 1, in juxtaposition with each other in the axial direction to form a single unit. This speed reducer is mounted in a drive unit of a device including a driven unit actuated by a motor.

The housing 1 is divided into a front half portion 1a on the side of the reduction mechanism 2, and a rear half portion 1b on the side of the reverse input shutoff mechanism 3. The front half portion 1a and the rear half portion 1b are formed with flanges 1c at their respective ends in abutment with each other. The flanges 1c are each formed with a plurality of mounting holes 1d at positions corresponding to the mounted holes 1d formed in the other flange 1c. With the front half portion 1a and the rear half portion 1b connected together using the mounting holes 1d, the entire housing 1 is fixed in position in the device.

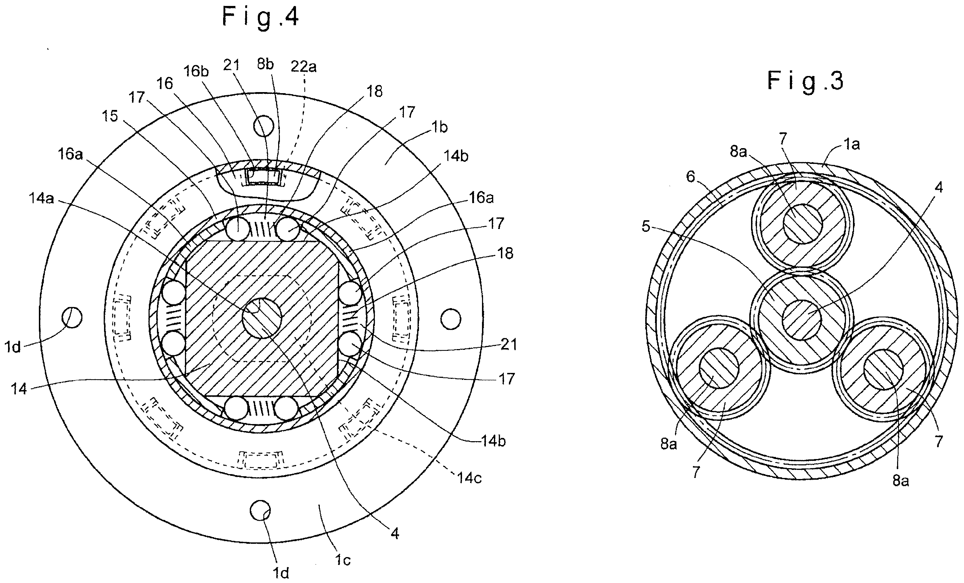

As shown in Figs. 1 and 3, the reduction mechanism 2 is a planetary gear mechanism comprising an input shaft 4; a sun gear 5 fixedly fitted on the outer periphery of the input shaft 4, an internal gear 6 disposed radially outwardly of the sun gear 5, and fixed to the front half portion 1a of the housing 1; a plurality of planetary gears 7 each meshing with both the sun gear 5 and the internal gear 6; and a carrier 8 having support shafts 8a extending through the centers of the respective planetary gears 7, and supporting the planetary gears 7 so as to be rotatable about their own axes. The sun gear 5 is fixedly fitted on the input shaft 4 by means of keys and key grooves. (The below-described other gears are also fixedly fitted on the corresponding shafts by keys and key grooves.) Alternatively, however, the input shaft 4 and the sun gear 5 may be integral with each other.

One end portion (left end portion in Fig. 1) of the input shaft 4 of the reduction mechanism 2 extends through the center of the carrier 8 and protrudes toward the reverse input shutoff mechanism 3, and its other end portion (right end portion in Fig. 1) extends through the front half portion 1a of the housing 1, while being rotatably supported by the housing 1 through a bearing 9. An input gear 10 is fixedly fitted on the outer periphery of the portion of the input shaft 4 protruding from the housing front half portion 1a. The input gear 10 meshes with a transmission gear 13 fixedly fitted on the outer periphery of the shaft 12 of a driving motor 11, whereby rotation is transmitted from the driving motor 11 to the input shaft 4 through the transmission gear 13 and the input gear 10.

Thus, when the driving motor 11 is actuated, the input shaft 4 rotates in unison with the sun gear 5, so that the planetary gears 7 revolve around the input shaft 4 while rotating about their own axes, thus rotating the carrier 8 at a reduced speed. The outer peripheral portion of the carrier 8 is formed with a plurality of circumferentially equidistantly spaced apart protrusions 8b through which, as described later, rotation is transmitted to the reverse input shutoff mechanism 3. Thus, the carrier 8 serves both as an output member of the reduction mechanism 2 and an input portion of the reverse input shutoff mechanism 3. The carrier 8 may be divided into two separate portions which, respectively, serve as the output member of the reduction mechanism 2 and the input portion of the reverse input shutoff mechanism 3, and which are coupled together so that rotation can be transmitted therebetween.

As shown in Figs. 1, 2 and 4, the reverse input shutoff mechanism 3 is a reverse input shutoff clutch including the carrier 8, as the above-described input portion; an output shaft 14, as an output portion, connected to a driven member, not shown, so as to be capable of transmitting rotation to the driven member; a fixed outer ring 15 disposed radially outwardly of the output shaft 14 and forming a portion of the housing rear half portion 1b, the outer ring 15 being formed with a cylindrical surface on its inner periphery; an annular unlocking piece 16 including pillars 16a provided on the inner peripheral portion of the unlocking piece 16 and inserted between the outer peripheral surface of a large-diameter portion of the output shaft 14 and the inner peripheral surface of the fixed outer ring 15; and rollers 17 and coil springs 18 disposed between the outer peripheral surface of the large-diameter portion of the output shaft 14 and the inner peripheral surface of the fixed outer ring 15.

The output shaft 14 of the reverse input shutoff mechanism 3 is formed, in its central portion, with a bearing hole 14a in which the one end portion of the input shaft 4 of the reduction mechanism 2 is rotatably inserted, and is arranged coaxially with the input shaft 4. The output shaft 14 is rotatably supported by the housing 1 through a bearing 19 so as to be capable of transmitting rotation to the driven member through an output gear 20 fixedly fitted on the outer periphery of the portion of the output shaft 14 protruding from the housing rear half portion 1b.

The outer periphery of the large-diameter portion of the output shaft 14 is formed with a plurality cam surfaces 14b each extending perpendicular to the radial direction such that a wedge-shaped space 21 which gradually narrows toward the respective circumferential ends is defined between each cam surface 14b and the cylindrical surface on the inner periphery of the fixed outer ring 15. A pair of the rollers 17 and one of the coil springs 18 are received in each wedge-shaped space 21 such that the pair of rollers 17 are pushed into the respective narrow end portions of the wedge-shaped space 21 by the coil spring 18. The pillars 16a of the unlocking piece 16 are inserted in the respective circumferential end portions of the wedge-shaped spaces 21 (portions of the wedge-shaped spaces 21 across the respective rollers 17 from the coil springs 18). The outer peripheral portion of the unlocking piece 16 is formed with first engaging holes 16b in which are inserted the respective protrusions 8b of the carrier 8 with circumferential gaps left therebetween.

The other end portion 14c of the output shaft 14 has a section in the shape of a track. A flange 22 which is sandwiched between the unlocking piece 16 and the carrier 8 is fixedly fitted on the outer periphery the other end portion 14c of the output shaft 14. The outer peripheral portion of the flange 22 is formed with second engaging holes 22a in which are inserted the protrusions 8b of the carrier 8 with circumferential gaps left therebetween which are larger than the circumferential gaps between the protrusions 8b and the first engaging holes 16b of the unlocking piece 16.

With this reverse input shutoff mechanism 3, when reverse input torque is applied from the driven member to the output shaft 14, since the rotationally rearward rollers 17 are wedged into the narrow end portions of the wedge-shaped spaces 21 under the biasing force of the coil springs 18, the output shaft 14 is locked to the fixed outer ring 15, so that the position (attitude) of the driven member remains unchanged.

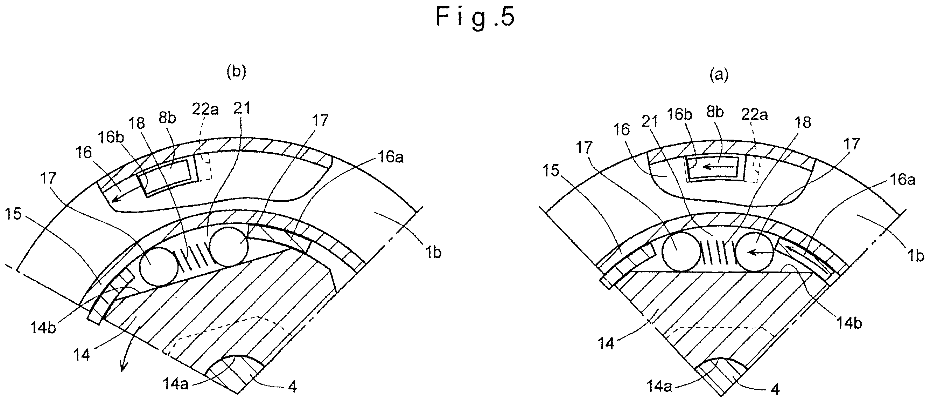

On the other hand, when the driving motor 11 is actuated, and the carrier 8, which is both the output member of the reduction mechanism 2 and the input portion of the reverse input shutoff mechanism 3, rotates, the protrusions 8b of the carrier 8 first engage, as shown in Fig. 5(a), the first engaging holes 16b of the unlocking piece 16, and circumferentially push the unlocking piece 16. As a result, the pillars 16a of the unlocking piece 16 push the rotationally rearward rollers 17 toward the wider portions of the wedge-shaped spaces 21 against the biasing force of the coil springs 18, thereby unlocking the output shaft 14 from the fixed outer ring 15. Then, when the carrier 8 further rotates, and the protrusions 8b engage, as shown in Fig. 5(b), the second engaging holes 22a of the flange 22 of the output shaft 14, the protrusions 8b now circumferentially push the flange 22, so that the rotation of the carrier 8 is transmitted to the output shaft 14, which is integral with the flange 22, and then to the driven member through the output gear 20.

Thus, this reverse input shutoff mechanism 3 is of a locking type including the locking means configured to lock the output shaft 14 to the fixed outer ring 15, the unlocking means configured to unlock the output shaft 3 from the fixed outer ring 15 when the carrier 8 rotates under input toque applied to the carrier 8 (input portion). and the torque transmission means configured to transmit the torque of the carrier 8 to the output shaft 14 with a slight angular delay.

As described above, since this speed reducer includes the reduction mechanism 2 configured to transmit the rotation of the driving motor 11 to the driven member, and the reverse input shutoff mechanism 3 configured, as a brake, to retain the position of the driven member while the driving motor 11 is not being driven, with the reduction mechanism 2 and the reverse input shutoff mechanism 3 forming a single unit, and further, the reverse input shutoff mechanism 3 is configured to mechanically lock up when reverse input torque is applied from the driven member, this speed reducer need no electric energy, and can be easily mounted in a device. Moreover, the device in which is incorporated this speed reducer consumes less electric energy and can be assembled easily, compared to a device in which are separately mounted an electromagnetic brake configured to be actuated when not energized, and a speed reducer. Further, since torque applied from the driven member while the driving motor 11 is not being driven is received by the reverse input shutoff mechanism 3 and not transmitted to the reduction mechanism 2, the reduction mechanism 2 is sufficiently protected.

In the reverse input shutoff mechanism 3, since the protrusions 8b of the carrier 8 as the input portion of the mechanism 3 are inserted in the first engaging holes 16b of the unlocking piece 16 and the second engaging holes 22a of the flange 22 of the output shaft 14 with circumferential gaps left therebetween such that the protrusions 8b first engage the first engaging holes 16b, thereby unlocking the mechanism 3, and then engage the second engaging holes 22a, thereby transmitting rotation, by suitably designing the circumferential gaps between the first engaging holes 16b and the protrusions 8b and between the second engaging holes 22a and the protrusions 8b, it is possible to reliably transmit rotation after unlocking the mechanism 3, and also minimize the time period after unlocking the mechanism 3 until the start of transmission of torque.

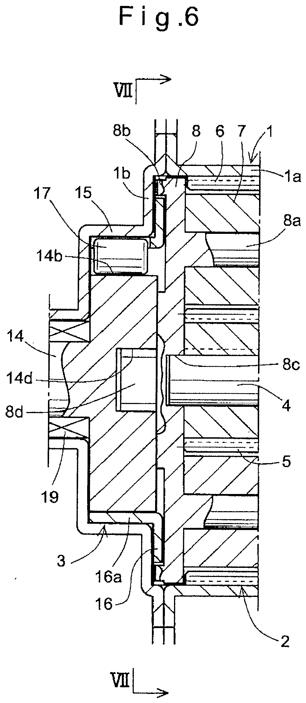

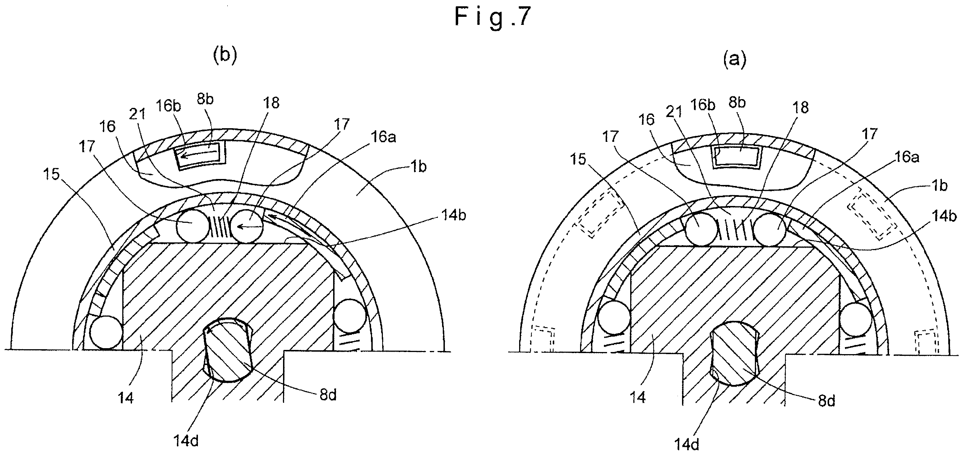

Figs. 6, 7(a) and 7(b) show a modified torque transmission means of the reverse input shutoff mechanism 3. In this modified example, the one end portion of the input shaft 4 is shorter, and is rotatably fitted in a bearing hole 8c formed in the center of the surface of the carrier 8 on the input side thereof, and the carrier 8 includes a rotation transmission shaft 8d having a section in the shape of a track, at the center of the output-side end surface of the carrier 8. The output shaft 14 has neither the other end portion 14c having a track-shaped section, nor the flange 22, and is formed, instead of the bearing hole 14a in which is inserted the one end portion of the input shaft 14, with a third engaging hole 14d in which is inserted the rotation transmission shaft 8d of the carrier 8. While the third engaging hole 14d is substantially identical in shape to the rotation transmission shaft 8d, its engaging surfaces that are opposed to the flat surfaces of the rotation transmission shaft 8d are convex in shape.

In this arrangement, when the driving motor 11 is actuated and the carrier 8 rotates, the protrusions 8b of the carrier 8 engage, as shown in Fig. 7(b), the first engaging holes 16b of the unlocking piece 16, and circumferentially push the unlocking piece 16, thereby unlocking the output shaft 14 from the fixed outer ring 15. When the carrier 8 further rotates after the output shaft 14 is unlocked from the fixed outer ring 15, the rotation transmission shaft 8d engages the third engaging hole 14d with the flat surfaces of the rotation transmission shaft 8d in surface contact with half portions of the convex engaging surfaces of the third engaging hole 14d, so that the rotation of the carrier 8 is transmitted to the output shaft 14. The speed reducer of this modified example is made up of a smaller number of parts, and thus can be assembled more easily, than the speed reducer shown in Figs. 1 to 5(b), though it is difficult, in the modified example, to shorten the time after unlocking until the start of transmission of torque.

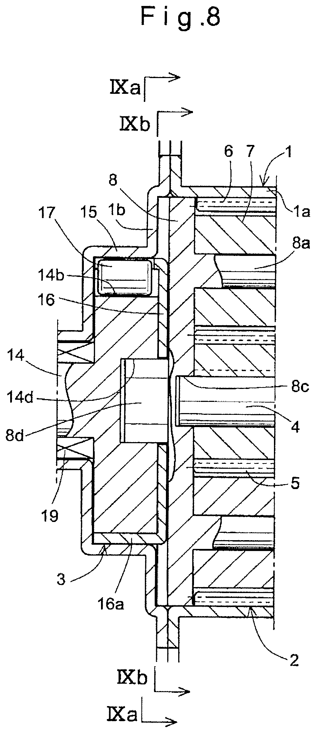

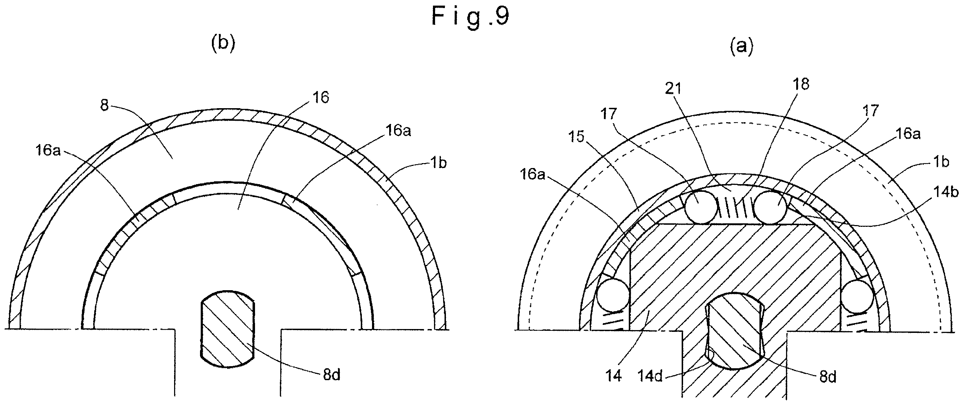

In a modified example shown in Figs. 8, 9(a) and 9(b), in addition to the above-described modification of the torque transmission means of the reverse input shutoff mechanism 3, its unlocking means is also modified. This modified example is basically of the same structure as the example shown in Figs. 6, 7(a) and 7(b), except that the carrier 8 has no protrusions 8b, and the unlocking piece 16 is a disk-shaped member provided with pillars 16a at its outer peripheral portion, and not including the first engaging holes 16b, and is fixedly fitted on the outer periphery of the rotation transmission shaft 8d of the carrier 8, which has a track-shaped section.

In this arrangement, when the driving motor 11 is actuated, and the carrier 8 rotates, the unlocking piece 16 rotates in unison with the rotation transmission shaft 8d of the carrier 8, and as a result, the pillars 16a pushes the rotationally rearward rollers 17, thereby unlocking the reverse input shutoff mechanism 3. Thereafter, rotation is transmitted from the rotation transmission shaft 8d to the output shaft 14 in the same manner as in the example of Figs. 6, 7(a) and 7(b). The carrier 8 and the unlocking piece 16 of this modified example are simpler in structure, and thus can be manufactured more easily, than those of the example of Figs. 6, 7(a) and 7(b).

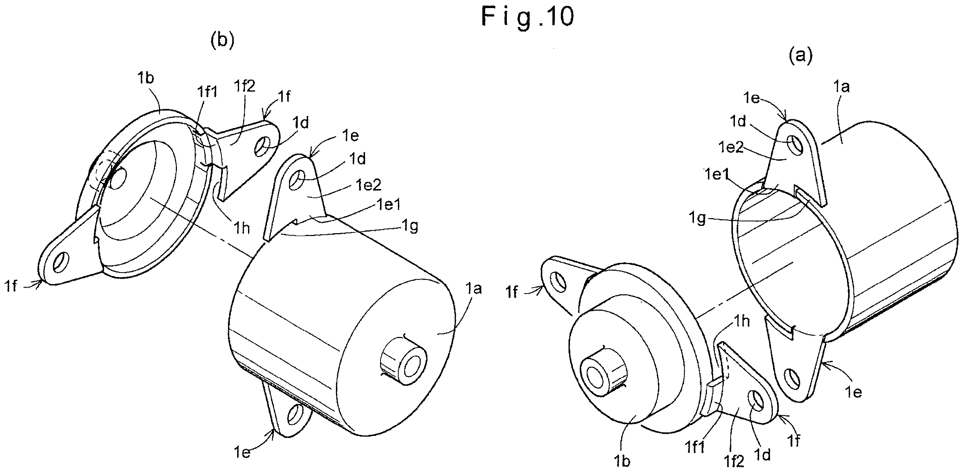

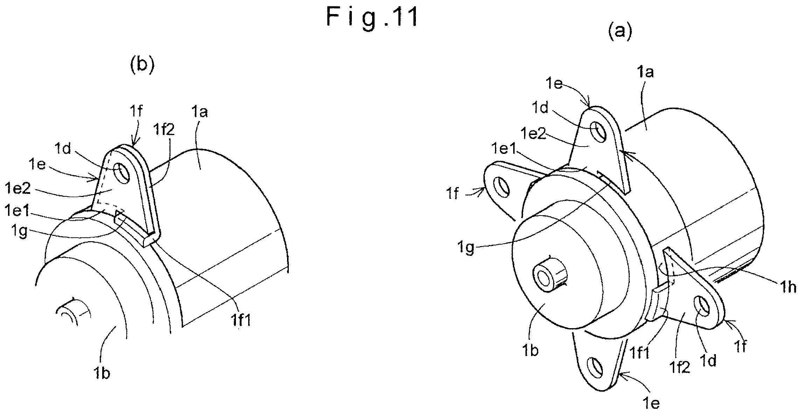

Figs. 10(a), 10(b), 11(a) and 11(b) shows a modified assembling means of the housing 1. In this modified example, as shown in Figs. 10(a) and 10(b), each of the front half portion 1a and the rear half portion 1b of the housing 1 includes, instead of the flange 1c, two identical mounting pieces 1e, 1f provided at its abutment end in abutment with the other of the front half portion 1a and the rear half portion 1b so as to be located opposite from each other with the center of the housing 1 therebetween.

Each mounting piece 1e of the front half portion 1a comprises a base portion 1e1 extending radially from the abutment end of the front half portion 1a, and a substantially triangular body portion 1e2 extending radially from the distal edge of the base portion 1e1, with a cut 1g defined between the body portion 1e2 and the abutment end. Each mounting piece 1f of the rear half portion 1b comprises a base portion 1f1 extending axially from the abutment end of the rear half portion 1b, and a substantially triangular body portion 1f2 extending radially from the distal edge of the base portion 1f1, with a cut 1h defined between the body portion 1f2 and the abutment end, such the circumferential positional relationship between the base portion 1f1 and the cut 1h is opposite to the circumferential positional relationship between the base portion 1e1 and the cut 1g of each mounting piece 1e of the front half portion 1a. The body portions 1e2 and 1f2 of the mounting pieces 1e and 1f are each formed with a mounting hole 1d.

The front half portion 1a and the rear half portion 1b are formed with slits at their portions on both sides of the base portions 1e1 and 1f1 of the respective mounting pieces 1e and 1f, to prevent the base portions 1e1 and 1f1 from axially protruding from the respective end surfaces, thereby enabling the end surfaces of the front half portion 1a and the rear half portion 1b to be brought into abutment with each other with no gap left therebetween.

In assembling this housing 1, as shown in Fig. 11(a), the front half portion 1a and the rear half portion 1b are brought into abutment with each other, with the mounting pieces 1e not axially overlapping with the mounting pieces 1f. Then, the front half portion 1a and the rear half portion 1b are rotated relative to each other in the direction in which the cuts 1g and 1h move toward each other (in Figs. 11(a), only the rear half portion 1b is rotated), until, as shown in Fig. 11(b), the mounting pieces 1e are axially superposed on, and mesh with, the respective mounting pieces 1f, with the base portions 1f1 of the mounting pieces 1f inserted into the cuts 1g of the respective mounting pieces 1e, and the base portions 1e1 of the mounting pieces 1e inserted into the cuts 1h of the respective mounting pieces 1f. The front half portion 1a and the rear half portion 1b are thus fixedly coupled to each other. In this state, since the mounting holes 1d of the mounting pieces 1e are aligned with the mounting holes 1d of the respective mounting pieces 1f, the front half portion 1a and the rear half portion 1b, which are now fixed coupled together, can be fixed in position in the device, utilizing the mounting holes 1d.

With this modified assembling means of the housing 1, the housing 1 can be stored and transported with the its front half portion 1a and rear half portion 1b fixedly coupled together. The housing 1 of this modified example can thus be handled easily, compared to the example of Figs. 1 to 9(b). As a further alternative assembling means of the housing, in the embodiment of Figs. 1 to 9(b), claws could be provided on one of the flanges of the front half portion and the rear half portion so that the claws can engage the edges of cutouts formed in the other flange. In this arrangement, however, it is necessary to bend the claws in order to fixedly couple together the front half portion 1a and the rear half portion 1b. In contrast, in the above-described modified example, since the front half portion 1a and the rear half portion 1b can be fixedly coupled together simply by rotating them relative to each other, the housing can be assembled easily. Also, since this housing can be disassembled easily, this housing is easily reusable.

While in the example of Figs. 10(a), 10(b), 11(a) and 11(b), the mounting pieces 1e, including the radially extending base portions 1e1, are provided on the front half portion 1a, and the mounting pieces 1f, including the axially extending base portions 1f1, are provided on the rear half portion 1b, the mounting pieces 1e and 1f may be instead provided, respectively, on the rear half portions 1b and the front half portions 1a. This modified assembling means of the housing can also be used e.g., for a housing of a speed reducer including only the reduction mechanism, or a housing of a reverse input shutoff clutch. If one of the members to be fixedly coupled together is a lid-shaped member, it is not necessary to form the above-mentioned slits in the lid-shaped member, so that the housing can be manufactured easily.

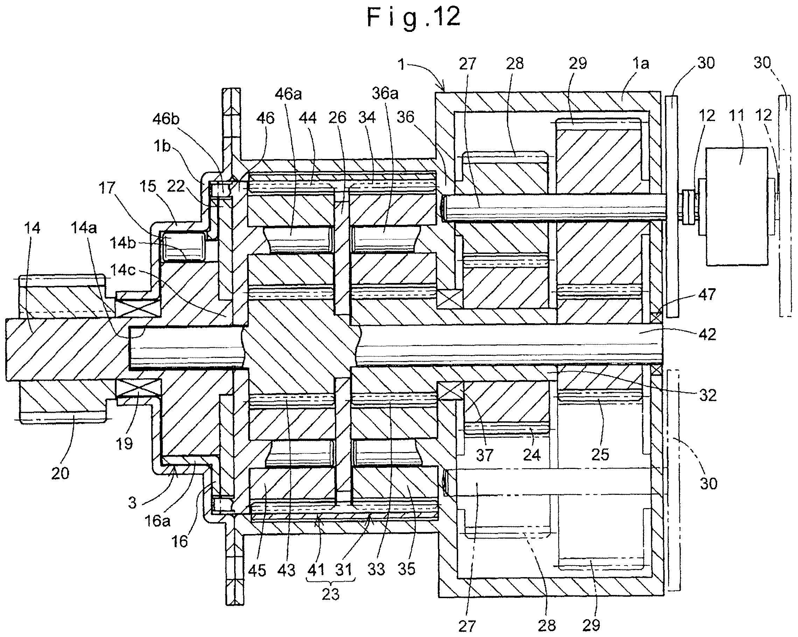

Fig. 12 shows a second embodiment, in which instead of the reduction mechanism 2 of the first embodiment, a differential type reduction mechanism 23 is used which comprises two planetary gear mechanisms (a first planetary gear mechanism 31 and a second planetary gear mechanism 41) which are arranged in juxtaposition with each other in the axial direction. Also, corresponding to the reduction mechanism 23, the structure from the driving motor 11 to the reduction mechanism 23 is altered, and the front half portion 1a of the housing 1 is also altered to cover the altered structure. The reverse input shutoff mechanism 3 as the brake is identical in structure to that of the first embodiment.

The first planetary gear mechanism 31 comprises a cylindrical first input shaft 32; a first sun gear 33 integral with the first input shaft 32; a first internal gear 34 disposed radially outwardly of the first sun gear 33; a plurality of first planetary gears 35 each meshing with both the first sun gear 33 and the first internal gear 34; and a first carrier 36 including support shaft 36a extending through the centers of the respective first planetary gears 35, and supporting the first planetary gears 35 so as to be rotatable about their own axes. The first carrier 36 is integral with the housing front half portion 1a. The first input shaft 32 extends through the center of the first carrier 36, and is rotatably supported by the first carrier 36 through a bearing 37. A first input gear 24 is fixedly fitted on the outer periphery of a portion of the first input shaft 32 protruding from the first carrier 36.

The second planetary gear mechanism 41 comprises a second input shaft 42 rotatably extending through the first input shaft 32 of the first planetary gear mechanism 31; a second sun gear 43 integral with a portion of the second input shaft 42 protruding from the one end of the first input shaft 32; a second internal gear 44 integral with the first internal gear 34 and disposed radially outwardly of the second sun gear 43; a plurality of second planetary gears 45 each meshing with both the second sun gear 43 and the second internal gear 44; and a second carrier 46 including support shaft 46a extending through the centers of the respective second planetary gears 45, and supporting the second planetary gears 45 so as to be rotatable about their own axes. As with the carrier 8 of the first embodiment, the second carrier 46 is provided with a plurality of protrusions 46b through which rotation is transmitted to the reverse input shutoff mechanism 3.

As with the input shaft 4 of the first embodiment, the one end portion of the second input shaft 42 of the second planetary gear mechanism 41 extends through the center of the carrier 36, and rotatably fitted in the bearing hole 14a of the output shaft 14 of the reverse input shutoff mechanism 3. A second input gear 25 is fixedly fitted on the outer periphery of a portion of the second input shaft 42 protruding from the other end of the first input shaft 32. The second input shaft 42 is rotatably supported at its other end portion by the housing 1 through a bearing 47. A disk-shaped spacer 26 is fixedly fitted on the portion of the second input shaft 42 adjacent to the second sun gear 43 to prevent contact between the planetary gears 35 of the first planetary gear mechanism 31 and the planetary gears 45 of the second planetary gear mechanism 41.

The members of the first planetary gear mechanism 31 are identical in gear structure to the corresponding members of the second planetary gear mechanism 41, while the fist input gear 24 and the second input gear 25 are different in gear structure from each other. A drive shaft 27 is coupled to the shaft 12 of the driving motor 11 with the one end portion thereof rotatably supported by the first carrier 36. The first input gear 24 and the second input gear 25 respectively mesh with a first transmission gear 28 and a second transmission gear 29 which are fixedly fitted on the outer periphery of the drive shaft 27, whereby rotation is transmitted from the driving motor 11 to the respective input shafts 32 and 42 through the respective transmission gears 28 and 29 and the respective input gears 24 and 25 so that the first input shaft 32 and the second input shaft 42 are rotated at different rotational speeds.

Now the operation of the reduction mechanism 23 of this embodiment is described. When the driving motor 11 is actuated, the first input shaft 32 and the second input shaft 42 rotate at different rotational speeds, as described above. At this time, in the first planetary gear mechanism 31, since the first carrier 36 is fixed, the first planetary gears 35 only rotate about their own axes while not revolving around the sun gear 33, thus rotating the first internal gear 34 in the direction opposite to the direction in which the first input shaft 32 is rotating. In the second planetary gear mechanism 41, since the second internal gear 44 rotates in unison with the first internal gear 34, the second planetary gears 45 revolve around the second sun gear 43 at a speed corresponding to the difference in rotational speed between the first input shaft 32 and the second input shaft 42, while rotating about their own axes. By the revolution of the second planetary gears 45, the second carrier 46 rotates, so that the reverse input shutoff mechanism 3 is unlocked, and rotation is transmitted to the output shaft 14, in the same manner as in the first embodiment.

In the second embodiment, by use of the differential reduction mechanism 23, an extremely high reduction rate is achievable utilizing the difference in rotational speed between the first input shaft 32 and the second input shaft 42. Moreover, since the planetary gear mechanisms 31 and 41 are identical in gear structure, gears of the respective planetary gear mechanisms 31 and 41 can be designed efficiently, and their parts can be manufactured efficiently too.

A disk-shaped manual operating member 30 is fixedly fitted on the outer periphery of a portion of the drive shaft 27, as the input member of the reduction mechanism 23, that protrudes from the housing front half portion 1a so that, if necessary, the position (attitude) of the driven member can be changed by turning the manual operating member 30 while the driving motor 11 is not being driven, such as during maintenance. In an alternative arrangement shown by the one-dot chain line in Fig. 12, the shaft 12 of the driving motor 11 has a protruding portion protruding from the end of the driving motor 11 opposite from the reduction mechanism 23, and the manual operating member 30 is mounted on the end of the protruding portion of the shaft 12. In a further alternative arrangement shown by the two-dot chain lines in Fig. 12, an additional set of the drive shaft 27, the first transmission gear 28 and the second transmission gear 29 are provided, and the manual operating member 30 is mounted on the other end portion of the drive shaft 27 of the additional set.

In the arrangement in which the manual operating member 30 is mounted on the drive shaft 27 or on the shaft 12 of the driving motor 11, if the brake is a conventional electromagnetic brake which is actuated while not energized, it is necessary to turn the manual operating member after releasing the brake by energizing the brake, or to turn the manual operating member without releasing the brake by applying torque larger than the braking force. However, according to the present invention, since the locking type reverse input shutoff mechanism 3 is used, it is possible to change the position of the driven member by turning the manual operating member 30 without applying large torque and without the need to release the brake and thus safely.

The manual operating member 30 is detachably mounted to the drive shaft 27 (or to the shaft 12 of the driving motor 11) by e.g., a screw. Thus, while the speed reducer is being normally driven by the motor, the manual operating member 30 can be dismounted from the speed reducer, thereby minimizing the space necessary during operation.

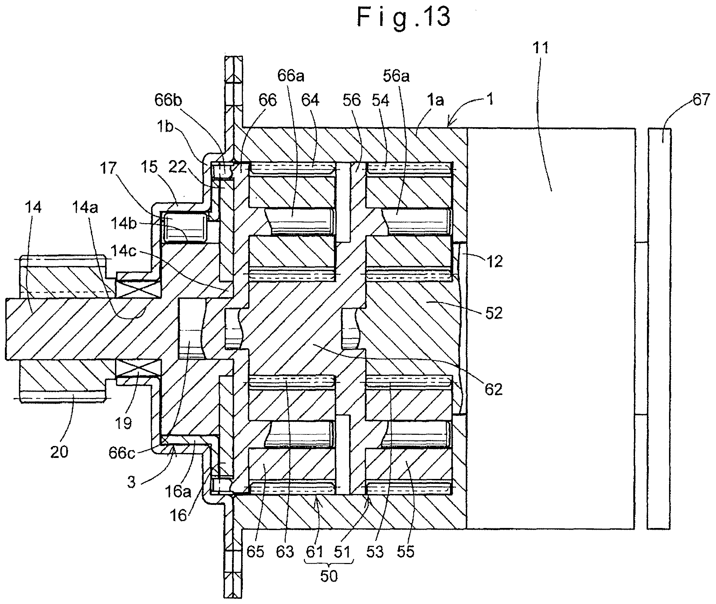

Fig. 13 shows the third embodiment, in which instead of the reduction mechanism 2 of the first embodiment, a reduction mechanism 50 is used which comprises two planetary gear mechanisms 51 and 61 mounted in two stages, and the front half portion 1a of the housing 1 is altered to cover the reduction mechanism 50. The reverse input shutoff mechanism 3 as a brake is identical in structure to that of the first embodiment.

The planetary gear mechanism 51 of the first stage includes an input shaft 52 integral with the driving motor shaft 12 and a sun gear 53; an internal gear 54 disposed radially outwardly of the sun gear 53 and fixed to the housing front half portion 1a; a plurality of planetary gears 55 each meshing with both the sun gear 53 and the internal gear 54; and a carrier 56 including support shafts 56a extending through the centers of the respective planetary gears 55, and supporting the planetary gears 55 so as to be rotatable about their own axes.

The planetary gear mechanism 61 of the second stage includes an input shaft 62 integral with the carrier 56 of the first stage and a sun gear 63; an internal gear 64 disposed radially outwardly of the sun gear 63 and fixed to the housing front half portion 1a; a plurality of planetary gears 65 each meshing with both the sun gear 63 and the internal gear 64; and a carrier 66 including support shafts 66a extending through the centers of the respective planetary gears 65, and supporting the planetary gears 65 so as to be rotatable about their own axes.

As with the carrier 8 of the first embodiment, the carrier 66 of the second stage has a plurality of protrusions 66b through which rotation is transmitted to the reverse input shutoff mechanism 3, and further includes a protruding shaft portion 66c protruding from the one end surface of the carrier 66 and rotatably fitted in the bearing hole 14a of the output shaft 14 of the reverse input shutoff mechanism 3. The one end portion of the input shaft 62 of the second stage is rotatably fitted in the center of the carrier 66 of the second stage at the other end of the carrier 66. The one end portion of the input shaft 52 of the first stage is rotatably fitted in the center of the input shaft 62 (which is the carrier 56 of the first stage) at the other end of the input shaft 62. With this arrangement, the rotation of the driving motor 11 is reduced in speed in two stages, and transmitted to the carrier 66 of the second stage. Then, in the same manner as in the first embodiment, the reverse input shutoff mechanism 3 is unlocked, and the rotation is transmitted from the carrier 66 of the second stage to the output shaft 14.

The shaft 12 of the driving motor 11 has a protruding portion protrudes from the end of the driving motor 11 opposite from the reduction mechanism 50, and a manual operating member 67 is mounted on the end of this protruding portion. Thus, as in the second embodiment, it is possible, if necessary, to change the position (attitude) of the driven member while the driving motor 11 is not being driven, such as during maintenance, by turning the manual operating member 67.

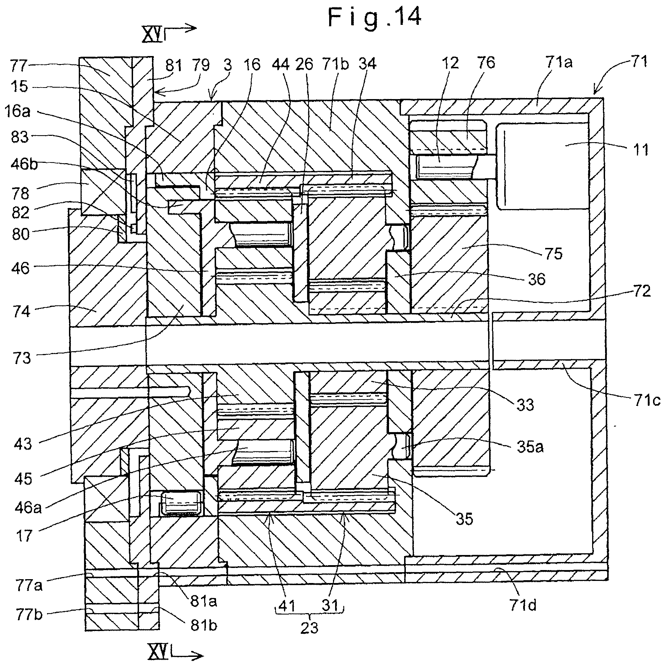

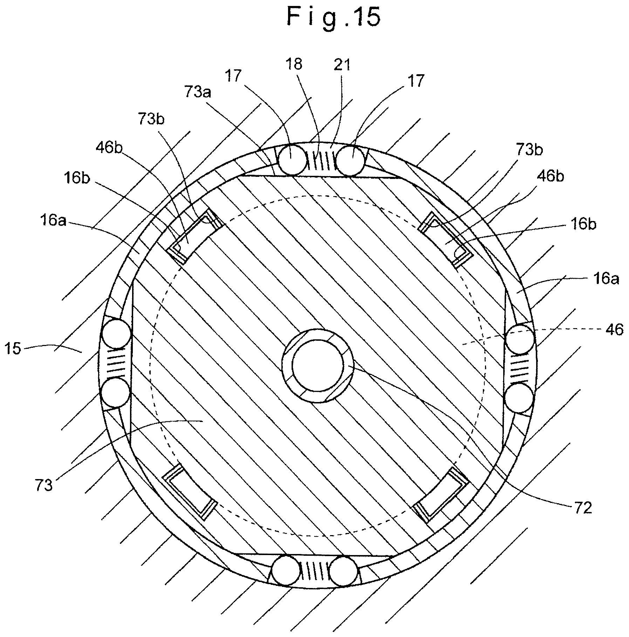

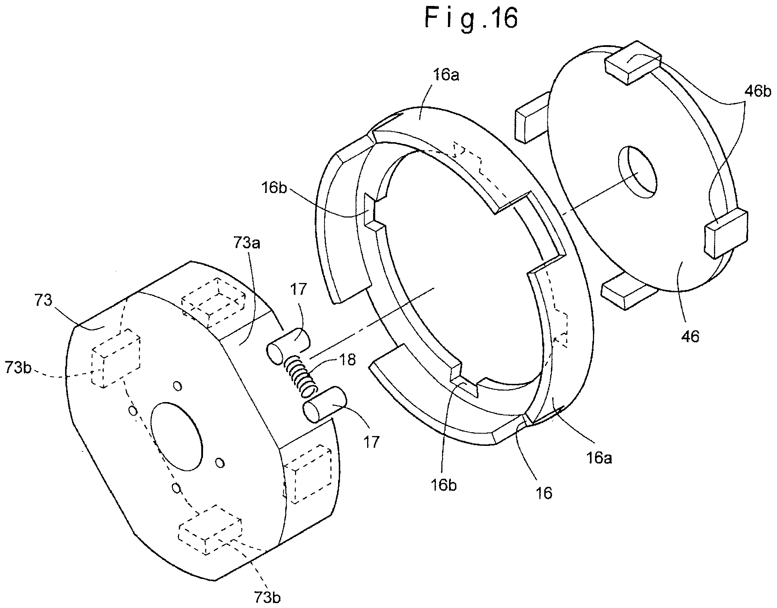

Figs. 14 to 17(b) show the fourth embodiment, in which the reverse input shutoff mechanism 3, the differential type reduction mechanism 23, and other structures, of the second embodiment are partially altered. Therefore, members identical in function to those of the second embodiment are denoted by identical numerals, and what is different from the second embodiment is mainly discussed below.

In the fourth embodiment, as shown in Fig. 14, the driving motor 11 is mounted in a front half portion 71a of a housing 71 having no steps on the outer peripheral surface, and the reduction mechanism 23 and the reverse input shutoff mechanism 3 are mounted in a rear half portion 71b of the housing 71. The housing front half portion 71a includes an inner tubular portion 71c extending axially inwardly from the center of the lid portion of the housing front half portion 71a. The output end portion of the housing rear half portion 71b is formed separately from the remaining portion of the housing rear half portion 71b, and serves as the fixed outer ring 15 of the reverse input shutoff mechanism 3. The first planetary gear mechanism 31 and the second planetary gear mechanism 41 of the reduction mechanism 23 has a common input shaft 72, and the output portion of the reverse input shutoff mechanism 3 is divided into a cam member 73 opposed to the inner peripheral surface of the fixed outer ring 15, and an output shaft 74 fixed to the axially outer side surface of the cam member 73. The cam member 73 and the output shaft 74 are formed with threaded holes by means of which the cam member 73 and the output shaft 74 can be fixedly joined together.

The input shaft 72 of the reduction mechanism 23 and the output shaft 74 of the reverse input shutoff mechanism 3 are hollow shafts having the same inner diameter as the inner tubular portion 71c of the housing 71 so that a cable (not shown) for controlling the driving motor 11 can be passed through the housing inner tubular portion 71c, the input shaft 72 and the output shaft 74.

The reduction mechanism 23 includes an input gear 75 fixedly fitted on the outer periphery of a portion of the input shaft 72 that is axially adjacent to the housing inner tubular portion 71c. The input gear 75 meshes with a transmission gear 76 fixedly fitted on the outer periphery of the shaft 12 of the driving motor 11, whereby rotation is transmitted from the driving motor 11 to the reduction mechanism 23. The transmission gear 76 has teeth smaller in number than the teeth of the input gear 75 (and thus has a diameter smaller than the input gear 75).

The fourth embodiment differs from the second embodiment in that the first sun gear 33 is fixedly fitted on the outer periphery of the input shaft 72, while the second sun gear 43 is integral with the input shaft 72; that the first internal gear 34 and the second internal gear 44 have different gear structures; and that the first planetary gears 35 each include a shaft portion 35a protruding from the center of the planetary gear 35, and supported by the first carrier 36, which is integral with the housing 71, so as to be rotatable about its axis.

With this reduction mechanism 23, when the driving motor 11 is actuated, its rotation is transmitted to the input shaft 72 through the transmission gear 76 and the input gear 75, so that the input shaft 72, the first sun gear 33 and the second sun gear 43 rotate in unison with each other. As a result, in the first planetary gear mechanism 31, since the first carrier 36 is fixed, the first planetary gears 35 only rotate about their own axes, while not revolving around the first sun gear 33, thus rotating the first internal gear 34 in the direction opposite to the direction in which the input shaft 72 is rotating. In the second planetary gear mechanism 41, since the second internal gear 44 rotates in unison with the first internal gear 34, the second planetary gears 45 revolve around the second sun gear 43 at a speed corresponding to the difference in rotational speed between the second sun gear 43 and the second internal gear 44, while rotating about their own axes. The revolution of the second planetary gears 45 is transmitted to the output side through the second carrier 46.

Thus, as in the second embodiment, a high reduction rate, due to differential motions of the two planetary gear mechanisms 31 and 41, is achievable in this embodiment, and also, since the rotation of the driving motor 11 is transmitted to the input shaft 72 through the transmission gear 76 and the input gear 75 after reducing its speed with the transmission gear 76 and the input gear 75, the planetary gears 35 and 45 rotate about their own axes at lower speeds than in the second embodiment. This prolongs the life of bearings disposed between the shaft portions 35a of the first planetary gears 35 and the first carrier 36 (such bearings are not shown), and bearings disposed between the second planetary gears 45 and the respective support shafts 46a of the second carrier 46 (these bearings are not shown either), so that the speed reducer of this embodiment can be used for a prolonged period of time in a stable manner.

In the example of Fig. 14, there is no driving motor in the housing 71 other than the single driving motor 11 shown. Alternatively, however, a plurality of such driving motors 11 may be provided around the axis of the input shaft 72, and transmission gears 76 may be fixedly fitted on the outer peripheries of the shafts 12 of the respective driving motors 11 such that the transmission gears 76 mesh with the input shaft 72. With this arrangement, by changing the number of driving motors 11 used, it is possible to easily adjust the output.

As shown in Figs. 14 to 16, the reverse input shutoff mechanism 3 of the fourth embodiment has no flange 22 of the second embodiment, and instead, the cam member 73, which constitutes the output portion of the reverse input shutoff mechanism 3, has cam surfaces 73a similar to the cam surfaces of the second embodiment, and engaging holes 73b are formed in the input side surface of the cam member 73 at its outer peripheral portion such that the protrusions 46b of the second carrier 46 are inserted in the engaging holes 73b with circumferential gaps left therebetween. In this embodiment, the pillars 16a and the engaging recesses 16b of the unlocking piece 16 are arranged conversely to the second embodiment. That is, the pillars 16a are provided at the outer peripheral portion of the unlocking piece 16, while the engaging recesses 16b are provided at the inner peripheral portion of the unlocking piece 16 such that the protrusions 46b of the second carrier 46 are inserted in the engaging recesses 16b with a circumferential gaps left between which are smaller than the circumferential gaps between the protrusions 46b and the engaging holes 73b of the cam member 73.

The reverse input shutoff mechanism 3 of this embodiment operates in the same manner as those of the previously described embodiments. That is, when reverse input torque is applied from the driven member to the output shaft 74 and the cam member 73, the cam member 73 remains locked to the fixed outer ring 15 because the rotationally rearward rollers 17 are pushed into the narrow ends of the wedge-shaped spaces 20 under the biasing force of the coil springs 18, so that the cam member 73 and the output shaft 74 do not rotate, and the position of the driven member remains unchanged.

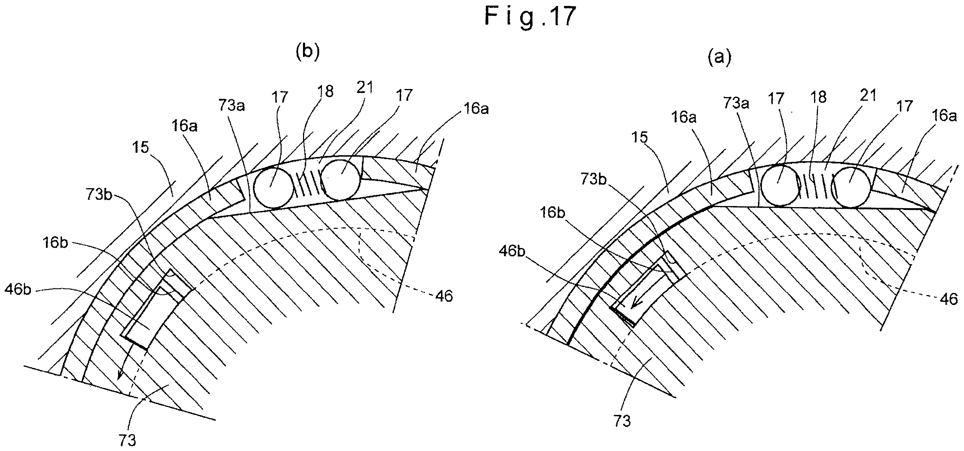

On the other hand, when the driving motor 11 is actuated, and its rotation is transmitted to the second carrier 46 after being reduced in speed, the protrusions 46b of the second carrier 46 first engage, as shown in Fig. 17(a), the engaging recesses 16b of the unlocking piece 16, and circumferentially push the unlocking piece 16. As a result, the pillars 16a of the unlocking piece 16 push the rotationally rearward rollers 17 toward the wide portions of the wedge-shaped spaces 21 against the biasing force of the coil springs 18 until the cam member 73 is unlocked from the fixed outer ring 15. Then, when, as shown in Fig. 17(b), the second carrier 46 further rotates, and the protrusions 46b engage the engaging holes 73b of the cam member 73, the protrusions 46b now circumferentially push the cam member 73, so that the rotation of the second carrier 46 is transmitted to the cam member 73 and the output shaft 74.

As shown in Fig. 14, the output shaft 74 is rotatably supported by a bearing 78 mounted on the inner periphery of a bearing housing 77, and a rotation detecting mechanism 79 configured to detect the rotational speed of the output shaft 74 is provided between the output shaft 74 and the bearing housing 77.

The rotation detecting mechanism 79 comprises an encoder 80 mounted on a stepped surface of the output shaft 74 formed on the axially central portion of the outer periphery of the output shaft 74; a base member 81 sandwiched between the bearing housing 77 and the fixed outer ring 15 of the reverse input shutoff mechanism 3; a sensor 82 mounted on the base member 81 so as to axially face the encoder 80; and an electronic circuit board 83 mounted on the base member 81 and configured to actuate the sensor 82.

The rotation detecting mechanism 79 is configured to detect the rotational speed of the output shaft 74, and correct the driving rotational speed of the driving motor 11 according to the difference between the rotational speed detected and a target rotational speed so that the rotational speed of the output shaft 74 is approximate to the target rotational speed. With this arrangement, it is possible to rotate the output shaft 74 at substantially the target rotational speed, even if there is a loss in transmission of rotation in any of the first and second planetary gear mechanisms 31 and 41, the reverse input shutoff mechanism 3, and other members that are disposed between the driving motor 11 and the output shaft 74.

The housing 71, the bearing housing 77 and the base member 81 of the rotation detecting mechanism 79 have first positioning steps formed on their surfaces axially opposed to each other so as to be coaxial with each other such that each axially opposed pair of the first positioning steps are fitted to each other. The housing 71 is further formed with second positioning steps formed on the respective surfaces along which the housing 71 is divided into a plurality of separate portions so as to be coaxial with each other and with the first positioning steps such that each axially opposed pair of the second positioning steps are fitted to each other. Each of the members 71, 77 and 81 is formed with a plurality of bolt holes 71d, 77a, 81a extending through its outer peripheral portion so as to be alignable with the bolt holes of the other members. With each opposed pair of the positioning steps fitted to each other, the bolt holes 71d are aligned with the respective bolt holes 77a and 81a, and the members 71, 77 and 81 are fixedly coupled together by bolts (not shown) passed through the respective aligned bolt holes 71d, 77a and 81a, and nuts (not shown). While the first and second positioning steps may be omitted, such positioning steps will make it easier to align the bolt holes 71d, 77a and 81a with each other, and thus to make it possible to efficiently assemble the entire speed reducer.

Radially outwardly of the bolt holes 77a, 81a, the bearing housing 77 and the base member 81 are each formed with threaded holes 77b, 81b so as to be alignable with the threaded holes 77b, 81b of the other of the bearing housing 77 and the base member 81. Using these threaded holes 77b and 81b, the speed reducer can be fixed in position in the device.

As described above, since the speed reducer of the fourth embodiment is designed such that the driving motor 11, the reduction mechanism 23, the reverse input shutoff mechanism 3 as a brake, and the rotation detecting mechanism 79 are combined to form a single unit, this speed reducer can be especially advantageously mounted in a joint driving portion of a robot.

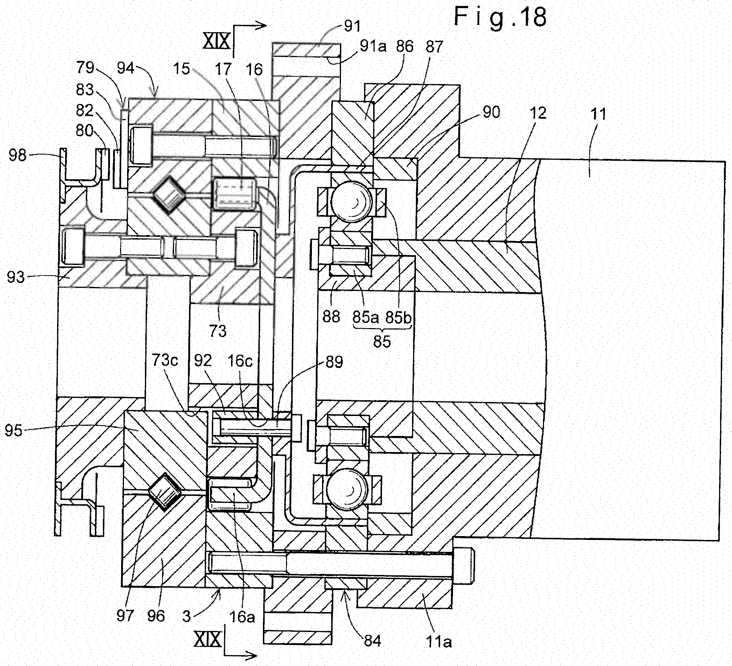

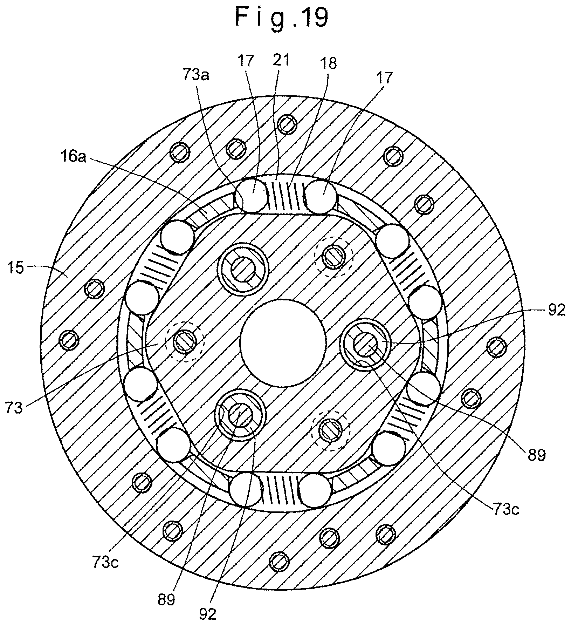

Figs. 18 and 19 show the fifth embodiment, in which instead of the reduction mechanisms 2, 23 and 50 of the first to fourth embodiments, which are all planetary gear mechanisms, a reduction mechanism 84 is used which is a wave generating gear device utilizing the differential action of an oval and a true circle. The speed reducer of this embodiment includes, instead of the housing 1, an annular mounting member 91 located at the axial center of the entire speed reducer. The mounting member 91 is formed with a plurality of threaded holes 91a at its outer peripheral portion. Using the threaded holes 91a, the speed reducer is fixed in position in the device.

The reduction mechanism (wave generating gear device) 84 includes a wave generator 85 coupled to the shaft 12 of a hollow driving motor 11 so that rotation can be transmitted therebetween; a circular spline 86 arranged radially outwardly of the wave generator 85; and a flex spline 87 having a large-diameter portion sandwiched between the wave generator 85 and the circular spline 86. The circular spline 86 is arranged axially adjacent to the mounting member 91. A flange portion 11a of the driving motor 11 and the fixed outer ring 15 of the reverse input shutoff mechanism 3 axially sandwich the circular spline 86 and the mounting member 91, and are joined together by bolts, so that the mounting member 91, the driving motor 11 and the fixed outer ring 15 are fixedly coupled together.

The wave generator 85 comprises a cam 85a having an oval diametrical section, and a ball bearing 85b having its inner race fixedly fitted on the outer periphery of the cam 85a, and is coupled to the shaft 12 of the driving motor 11 through a hollow anti-rotation member 88. The wave generator 85 thus serves as an input member of the reduction mechanism 84. The circular spline 86 is an annular member having teeth on the inner periphery thereof, and fixed in the device through the mounting member 91. The flex spline 87 is a thin, cup-shaped member made of a metal elastic material, and includes teeth meshing with the teeth of the circular spline 86. The flex spline 87 has a small-diameter portion (at the one end thereof) which is coupled to input pins 89 as the input portion of the reverse input shutoff mechanism 3 such that rotation can be transmitted therebetween. The flex spline 87 thus serves as the output member of the reduction mechanism 84.

When the driving motor 11 is actuated, and the wave generator 85 rotates, the outer race of the ball bearing 85b of the wave generator 85 presses the inner periphery of a large-diameter portion of the flex spline 87, thus deforming the flex spline 87 such that the portion of the flex spline 87 that meshes with the circular spline 86 changes, whereby the flex spline 87 rotates by the distance corresponding to the difference in number between the teeth of the flex spline 87 and the teeth of the circular spline 86, and the rotation of the flex spline 87 is transmitted to the input pins 89 of the reverse input shutoff mechanism 3.

A cylindrical guide member 90 is fixed to the inner periphery of the flange 11a of the driving motor 11 so as to be in sliding contact with the end surface (the other end surface) of the large-diameter portion of the flex spline 87. The guide member 90 restricts the axial movement of the flex spline 87 (and the unlocking piece 16 of the reverse input shutoff mechanism 3, which is in abutment with the one end surface of the flex spline 87) toward the other end of the speed reducer, thereby ensuring stable transmission of rotation. The cam member 73 of the reverse input shutoff mechanism 3 restricts the axial movements of the flex spline 87 and the unlocking piece 16 toward the one end of the speed reducer, by being in abutment with the unlocking piece 16.

The reduction mechanism 84 of the fifth embodiment, which comprises the above-described wave generating gear device, provides a high reduction rate. Compared to the speed reducer of any of the second to fourth embodiments, in which is used a reduction mechanism comprising two planetary gear mechanisms that are arranged in juxtaposition with each other in the axial direction, the speed reducer of the fifth embodiment is simple in structure and small in axial dimension.

On the other hand, the reverse input shutoff mechanism 3 of the fifth embodiment is basically identical in structure and operation to that of the fourth embodiment. Thus, the reverse input shutoff mechanism 3 of this embodiment is described below, mainly focusing on what differs from the fourth embodiment.

First, the cam member 73, as the output portion of the reverse input shutoff mechanism 3, is formed, instead of the engaging holes 73b of the fourth embodiment, with engaging holes 73c in which are inserted sleeves 92 fixedly fitted on the outer peripheries of the input pins 89, as the input portion, at the distal end portions of the input pins 89, with circumferential gaps left between the engaging holes 73c and the corresponding sleeves 92. The locking piece 16 is formed, instead of the engaging recesses 16b of the fourth embodiment, with engaging holes 16c in which are inserted the central portions of the respective input pins 89, with circumferential gaps left therebetween. The circumferential gaps between the engaging holes 16c of the unlocking piece 16 and the central portions of the respective input pins 89 are smaller than the circumferential gaps between the engaging holes 73c of the cam member 73 and the sleeves 92.

In this arrangement, when the rotation of the driving motor 11 is transmitted to the input pins 89 after being reduced in speed in the reduction mechanism 84, as in the fourth embodiment, the central portions of the input pins 89 engage the engaging holes 16c of the unlocking piece 16, thus circumferentially pushing, and unlocking, the unlocking piece 16. After the unlocking piece 16 is unlocked, the sleeves 92 fitted on the distal ends of the input pins 89 engage the engaging holes 73c of the cam member 73, and circumferentially push the cam member 73. Thus, the rotation of the input pins 89 is transmitted to the cam member 73.

A cross roller bearing 94 is provided between the cam member 73 of the reverse input shutoff mechanism 3 and a connecting member 93 connected to the driven member. The cross roller bearing 94 includes a plurality of rollers 97 disposed between an inner race 95 and an outer race 96 such that any circumferentially adjacent pair of the rollers 97 extend perpendicular to each other, with the inner race 95 joined to the cam member 73 and the connecting member 93 by bolts so as to rotate in unison with the cam member 73 and the connecting member 93, and the outer race 96 joined to the fixed outer ring 15 of the reverse input shutoff mechanism 3 by bolts. This arrangement increases the rigidity of the entire speed reducer against thrust forces, and thus ensures stable transmission of rotation.

A rotation detecting mechanism 79 similar to that of the fourth embodiment is provided between the outer race 96 of the cross roller bearing 94 and the connecting member 93. The rotation detecting mechanism 79 comprises an encoder 80 mounted on the inner side surface of a ring member 98 having a substantially U-shaped section and fixedly fitted on the outer peripheral surface of the connecting member 93; an electronic circuit board 83 mounted on the outer end surface of the outer race 96 of the cross roller bearing 94; and a sensor 82 mounted on the electronic circuit board 83 so as to axially face the encoder 80.

The rotation detecting mechanism 79 detects the rotational speed of the connecting member 93 and the ring member 98, which rotate in unison with the cam member 73 of the reverse input shutoff mechanism 3, and corrects the driving rotational speed of the driving motor 11 according to the target rotational speed, thereby improving the accuracy in rotational speed.

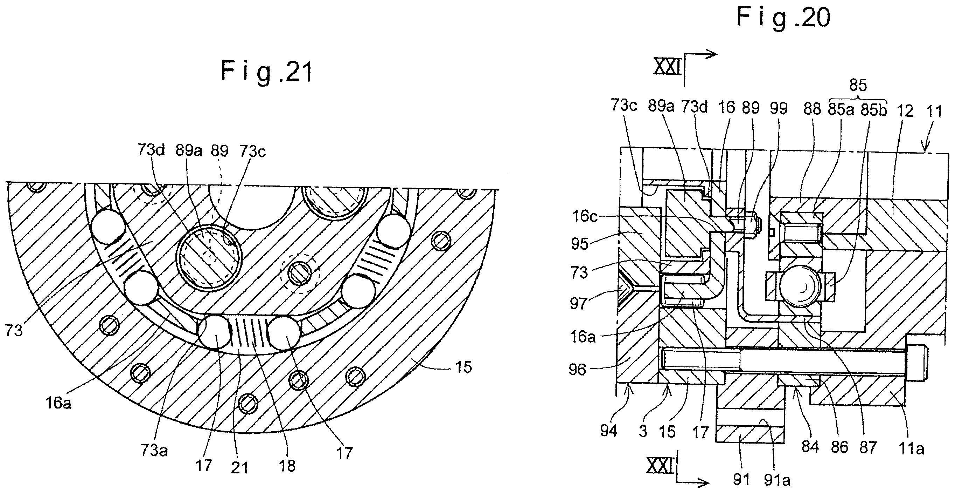

Figs. 20 and 21 show a modified means for restricting the axial movements of the flex spline 87 of the reduction mechanism 84 and the unlocking piece 16 of the reverse input shutoff mechanism 3, of the fifth embodiment, toward the other end of the speed reducer.

In this modified example, the distal end portions of the input pins 89, which extend through the small-diameter portion of the flex spline 87 and the unlocking piece 16, are formed with large-diameter portions 89a, and the sleeves 92 are omitted. The small-diameter portion of the flex spline 87 and the unlocking piece 16 are sandwiched, and tightened between the large-diameter portions 89a of the input pins 89 and nuts 99 threadedly engaging the portions of the input pins 89 protruding from the small-diameter portion of the flex spline 87. Further, the cam member 73 has annular guide portions 73d extending along the peripheral edges of the engaging holes 73c of the cam member 73, and inserted between stepped surfaces formed on mid-portions of the large-diameter portions 89a of the input pins 89 and the unlocking piece 16. With this arrangement, the guide portions 73d of the cam member 73 restrict the axial movements of the flex spline 87 and the unlocking piece 16 toward the other end of the speed reducer, by engaging the large-diameter portions 89a of the respective input pins 89.

Thus, compared to the embodiment of Figs. 18 and 19, since the guide member 90, which is in sliding contact with the end surface of the large-diameter portion of the flex spline 87, is omitted, the speed reducer of this example is made up of a smaller number of parts. Also, since, after the reverse input shutoff mechanism 3 is unlocked, the input pins 89 push the cam member 73 such that the input pins 89 rotate substantially in unison with the cam member 73, sliding portions decrease, so that it is possible to reduce torque of the entire speed reducer.

### DESCRIPTION OF THE NUMERALS

1. Housing
1a. Front half portion
1b. Rear half portion
1e, 1f. Mounting piece
1g, 1h. Cut
2, 23, 50. Reduction mechanism
3. Reverse input shutoff mechanism
4, 32, 42, 52, 62. Input shaft
5, 33, 43, 53, 63. Sun gear
6, 34, 44, 54, 64. Internal gear
7, 35, 45, 55, 65. Planetary gear
8, 36, 46, 56, 66. Carrier
8a, 36a, 46a, 56a, 66a. Support shaft
8b, 46b, 66b. Protrusion
8d. Rotation transmission shaft
10. Input gear
11. Driving motor
12. Shaft
13. Transmission gear
14. Output shaft
14d. Third engaging hole
15. Fixed outer ring
16. Unlocking piece
16a. Pillar
16b. First engaging hole
17. Roller
18. Coil spring
20. Output gear
21. Wedge-shaped space
22. Flange
22a. Second engaging hole
24, 25. Input gear
27. Drive shaft
28, 29. Transmission gear
30, 67. Manual operating member
31, 41, 51, 61. Planetary gear mechanism
71. Housing
71a. Front half portion
71b. Rear half portion
71c. Inner tubular portion
71d. Bolt holes
72. Input shaft
73. Cam member
73d. Guide portion
74. Output shaft
75. Input gear
76. Transmission gear
79. Rotation detecting mechanism
84. Reduction mechanism (wave generating gear device)
85. Wave generator
86. Circular spline
87. Flex spline
89. Input pin
90. Guide member
91. Mounting member
92. Sleeve
93. Connecting member
94. Cross roller bearing

## Claims

1. A speed reducer comprising:
a reduction mechanism configured to transmit a rotation of a driving motor toward a driven member after reducing the rotation; and
a brake configured to retain a position of the driven member while the driving motor is not being driven, wherein the brake comprises a reverse input shutoff mechanism including:
an input portion coupled to an output member of the reduction mechanism such that rotation can be transmitted therebetween; and
an output portion coupled to the driven member such that rotation can be transmitted therebetween, the reverse input shutoff mechanism being configured such that when input torque is applied to the input portion, a rotation of the input portion is transmitted to the output portion, and when reverse input torque is applied to the output portion, the output portion is locked and stopped.

2. The speed reducer of claim 1, wherein the reverse input shutoff mechanism comprises a reverse input shutoff clutch including:
a locking means configured to lock the output portion to a fixed member;
an unlocking means configured to unlock the output portion from the fixed member when the input portion is rotated under the input torque; and
a torque transmission means configured to transmit the rotation of the input portion to the output portion with a slight angular delay when the output portion is unlocked from the fixed member.

3. The speed reducer of claim 2, wherein the fixed member is a fixed outer ring disposed radially outwardly of the output portion, and having a cylindrical surface on an inner periphery of the fixed outer ring,
wherein the locking means includes:
the cylindrical surface;
cam surfaces formed on an outer periphery of the output portion such that a plurality of wedge-shaped spaces each gradually narrowing toward two circumferential ends thereof are defined between the output portion and the fixed outer ring;
pairs of rollers, each pair being mounted in each of the wedge-shaped spaces; and
springs each mounted in each of the wedge-shaped spaces and biasing the pair of rollers into the respective circumferential ends of the wedge-shaped space,
wherein the unlocking means includes:
an annular unlocking piece disposed radially outwardly of the output portion, the unlocking piece having pillars inserted on both circumferential sides of the wedge-shaped spaces, and being formed with a first engaging hole; and
a protrusion formed on the input portion, and inserted in the first engaging hole of the unlocking piece with a circumferential gap left between the first engaging hole and the protrusion,
wherein the unlocking means is configured such that when the input portion rotates, the protrusion engages the first engaging hole, and circumferentially pushes the unlocking piece such that the pillars of the unlocking piece push rotationally rearward ones of the rollers to wider portions of the respective wedge-shaped spaces, against biasing forces of the respective springs,
wherein the torque transmission means includes a second engaging hole formed in the output portion and arranged and shaped such that the protrusion of the input portion is inserted in the second engaging hole with a circumferential gap left between the second engaging hole and the protrusion, the circumferential gap between the second engaging hole and the protrusion being larger than the circumferential gap between the first engaging hole and the protrusion, whereby after the output portion is unlocked from the fixed member, the protrusion of the input portion engages the second engaging hole, and circumferentially pushes the output portion.

4. The speed reducer of any of claims 1 to 3, wherein a manual operating member is coupled to an input member of the reduction mechanism.

5. The speed reducer of claim 4, wherein the manual operating member is detachably coupled to the input member of the reduction mechanism.

6. The speed reducer of any of claims 1 to 5, wherein the reduction mechanism includes two planetary gear mechanisms arranged in juxtaposition with each other in an axial direction of the speed reducer, and configured to perform differential motions, and an input shaft, and wherein an input gear is fixedly fitted on an outer periphery of the input shaft, and a transmission gear is fixedly fitted on an outer periphery of a shaft of the driving motor so as to mesh with the input gear, the transmission gear having teeth fewer in number than teeth of the input gear.

7. The speed reducer of claim 6, wherein a plurality of driving motors including said driving motor are provided around an axis of the input shaft of the reduction mechanism, and transmission gears including said transmission gear are fixedly fitted, respectively, on outer peripheries of shafts of said plurality of driving motors.

8. The speed reducer of any of claims 1 to 5, wherein the reduction mechanism is a wave generating gear device comprising:
a wave generator coupled to the driving motor such that rotation can be transmitted therebetween, and serving as an input member of the reduction mechanism;
a circular spline fixed at a position radially outwardly of the wave generator; and
said output member, the output member comprising a flex spline disposed between the wave generator and the circular spline, and coupled, at one end portion of the flex spline, to the input portion of the reverse input shutoff mechanism such that rotation can be transmitted therebetween.

9. The speed reducer of claim 8, further comprising a guide member fixed at a position where the guide member is in sliding contact with an end surface of the flex spline at another end of the flex spline, and configured to restrict an axial movement of the flex spline toward another end of the speed reducer.

10. The speed reducer of claim 8, wherein the flex spline is axially joined to the input portion of the reverse input shutoff mechanism, and wherein the output portion of the reverse input shutoff mechanism includes a guide portion in engagement with the input portion of the reverse input shutoff mechanism, and configured to restrict an axial movement of the flex spline toward another end of the speed reducer.

11. The speed reducer of any of claims 1 to 10, further comprising a cross roller bearing disposed between the output portion of the reverse input shutoff mechanism and the driven member, and including an inner race coupled to the output portion of the reverse input shutoff mechanism and the driven member such that rotation can be transmitted therebetween; and an outer race which is fixed in position.

12. The speed reducer of any of claims 1 to 11, wherein a rotational speed of the output portion of the reverse input shutoff mechanism is detected, and a driving rotational speed of the driving motor is corrected according to a difference between the rotational speed detected and a predetermined target rotational speed.

13. The speed reducer of any of claims 1 to 12, wherein the driving motor, the reduction mechanism, and the reverse input shutoff mechanism are mounted in a single housing so that the driving motor, the reduction mechanism, and the reverse input shutoff mechanism constitute a single unit, wherein the housing is divided axially into a plurality of separate portions, wherein the separate portions are formed with positioning steps on surfaces along which the housing is divided into the separate portions, the positioning steps being coaxial with each other and fitted together, wherein with the positioning steps fitted together, bolt holes extending through the entire housing are aligned with each other, and the separate portions are fixedly coupled together by a bolt inserted through the bolt holes and a nut.

14. The speed reducer of any of claims 1 to 13, wherein the speed reducer is mounted in a joint driving portion of a robot.
